# EUROPEAN PATENT APPLICATION

(11) **EP 3 208 505 A1**
(43) Date of publication of application: **23.08.2017**
(21) Application number: 16155953.9
(22) Date of filing: 16.02.2016
(51) Int. Cl.: F16K 3/18

(54) **GATE VALVE**

(71) Applicant: BEL VALVES LIMITED, St Peters Newcastle upon Tyne NE6 1BS (GB)
(72) Inventor: The designation of the inventor has not yet been filed
(74) Representative: Vinsome, Rex Martin

(57) **Abstract**

A valve apparatus (2) for sealing connection to first and second parts (4, 6) of a conduit (8) is disclosed. The valve apparatus comprises first (10) and second (12) valve members moveable between first positions thereof, in which the valve members are sealingly connected to respective first and second parts (4, 6) of a conduit (8) in a first valve setting, and second positions thereof, in which the valve members are sealingly connected to the respective first and second parts in a second valve setting. Actuator means (14) is moveable relative to the valve members (10, 12) for moving the valve members (10, 12) into the first and second valve settings.

## Description

The present invention relates to a valve apparatus for controlling fluid flow along a conduit and relates particularly, but not exclusively, to a valve apparatus for controlling fluid flow in the petroleum industry.

Gate valves are used to control the flow of fluid along a conduit, such as water in a water pipe or extracted oil in an undersea conduit. Gate valves can be moved between a fully open condition, to present an open passage to the fluid, and a fully closed condition, to prevent fluid flow altogether.

In very high pressure environments, such as undersea pipelines, robust gate valves are required to form effective seals against fluid flowing along the pipelines, and to prevent the fluid from escaping the pipelines into the body of the gate valve when in a condition allowing the fluid to flow along the conduit.

US 7975983 B2 discloses a valve apparatus comprising actuation means having a diamond-shaped cross-section which engages a pair of valve members in first and second valve settings to sealingly connect to first and second parts of a conduit. In order for a sealing connection to be made between the valve apparatus and the conduit in both the first and the second valve settings, the distribution of sealing force exerted by the actuating means on the valve members necessarily does not cover an area equal to or larger than the cross-sectional area of the conduit in both valve settings.

Preferred embodiments of the present invention seek to overcome one or more of the disadvantages of the prior art.

According to an aspect of the present invention, there is provided a valve apparatus for sealing connection to first and second parts of a conduit, the valve apparatus comprising: at least one first valve member moveable between a first position thereof, in which said first valve member is sealingly connected to a first part of a conduit in a first valve setting, and a second position thereof, in which said first valve member is sealingly connected to said first part of said conduit in a second valve setting; at least one second valve member moveable between a first position thereof, in which said second valve member is sealingly connected to a second part of said conduit in said first valve setting, and a second position thereof, in which said second valve member is sealingly connected to said second part of said conduit in said second valve setting; and actuator means moveable relative to said first and second valve members for moving said first and second valve members into said first and second valve settings, the actuator means comprising: (i) at least one first engaging surface for slidably engaging said first valve member for urging said first valve member into said first valve setting; (ii) at least one second engaging surface for slidably engaging said first valve member for urging said first valve member into said second valve setting; (iii) at least one third engaging surface for slidably engaging said second valve member for urging said second valve member into said first valve setting; and (iv) at least one fourth engaging surface for slidably engaging said second valve member for urging said second valve member into said second valve setting wherein a position of engagement of at least one said first engaging surface with said first valve member is separated from a position of engagement of at least one said second engaging surface with said first valve member in a direction transverse to a direction of movement of said first valve member into said first and second valve settings and transverse to a direction of movement of the actuator means relative to the first valve member; and wherein a position of engagement of at least one said third engaging surface with said second valve member is separated from a position of engagement of at least one said fourth engaging surface with said second valve member in a direction transverse to a direction of movement of said second valve member into said first and second valve settings and transverse to a direction of movement of the actuator means relative to the second valve member.

This provides the advantage that a sealing force applied to the gate members by the actuating means can be evenly distributed over the parts of the valve members adjacent the conduit in both valve settings. This in turn minimises leakage of the valve apparatus, and enables an effective seal to be achieved with a lower applied sealing force.

The actuating means may comprise a plurality of said first and/or second surfaces arranged on opposite sides of at least one corresponding said second and/or first surface.

This provides the advantage that the sealing force may be distributed symmetrically over the parts of the valve members adjacent the conduit, thereby reducing or eliminating a net torque experienced by the valve apparatus during operation.

The first and second valve members may each have at least one respective aperture therethrough to allow fluid communication between said first and second parts of said conduit in at least one of said first and second valve settings.

This provides the advantage that the valve apparatus may allow the passage of fluid between the first and second parts of the conduit while maintaining an even sealing force around the conduit's circumference.

The valve apparatus may be adapted to prevent fluid flow between said first and second parts of said conduit in at least one of said first and second valve settings.

This provides the advantage that ingress of abrasive particles carried in fluid into the valve housing is minimised.

The actuator means may comprise at least one first actuating member comprising at least one said first engaging surface and at least one said third engaging surface defining opposite faces of said first actuating member; and at least one second actuating member comprising at least one said second engaging surface and at least one said fourth engaging surface defining opposite faces of said second actuating member.

This provides the advantage of reducing the size of the valve apparatus for a given total sealing force.

At least one said first engaging surface may be inclined relative to at least one said third engaging surface, and at least one said second engaging surface may be inclined relative to at least one said fourth engaging surface.

This provides the advantage that the component of sealing force applied to the gate members by the actuating means may be have a linear relationship with distance travelled by the valve members.

The actuating means may further comprise at least one aperture therethrough to allow fluid communication between said first and second parts of said conduit in at least one of said first and second valve settings.

This provides the advantage of simplifying the construction of the valve apparatus.

A preferred embodiment of the invention will now be described, by way of example only and not in any limitative sense, with reference to the accompanying drawings, in which:-
Figure 1 is a cross-sectional view of a valve apparatus embodying the present invention in a first valve setting;
Figure 2 is a cross-sectional view of the valve apparatus of Figure 1 in a second valve setting;
Figure 3 is a side view of actuating means according to an embodiment of the present invention; and
Figure 4 is a perspective view of the actuating means of Figure 3 showing a number of inclined engaging surfaces.

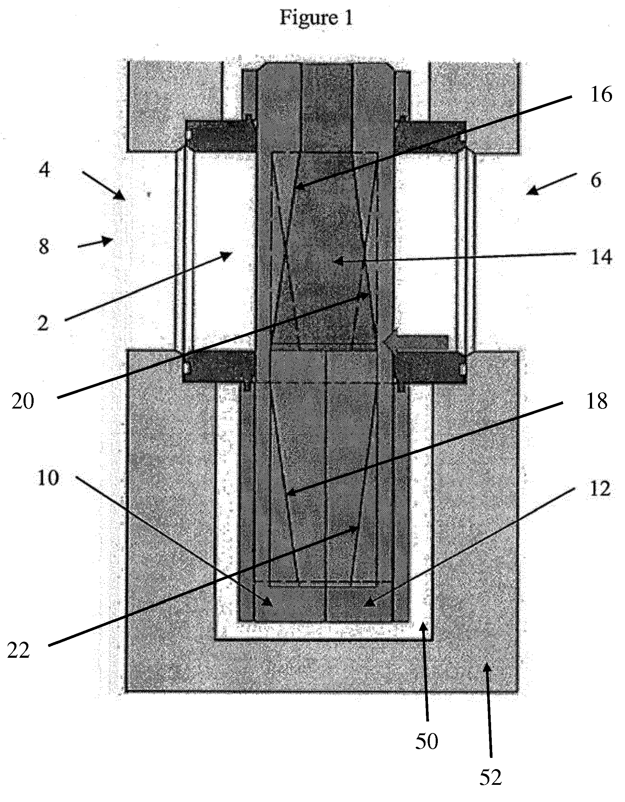

Referring to Figure 1, a valve apparatus 2 embodying the present invention for controlling a flow of fluid between first and second parts 4 and 6 of a conduit 8 is shown in a first valve setting, in which a first valve member 10 and a second valve member 12 are urged by actuating means 14 toward the respective first part 4 and second part 6 of the conduit 8 to form respective sealing connections thereto.

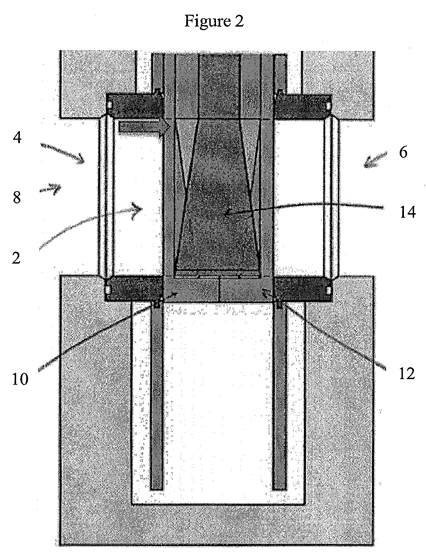

Referring to Figure 2, the valve apparatus 2 is shown in a second valve setting, in which the first valve member 10 and the second valve member 12 are urged by the actuating means 14 toward the respective first part 4 and second part 6 of the conduit 8 to form respective sealing connections thereto.

The first valve member 10 has inclined engaging surfaces 16 and 18, and the second valve member 12 has inclined engaging surfaces 20 and 22.

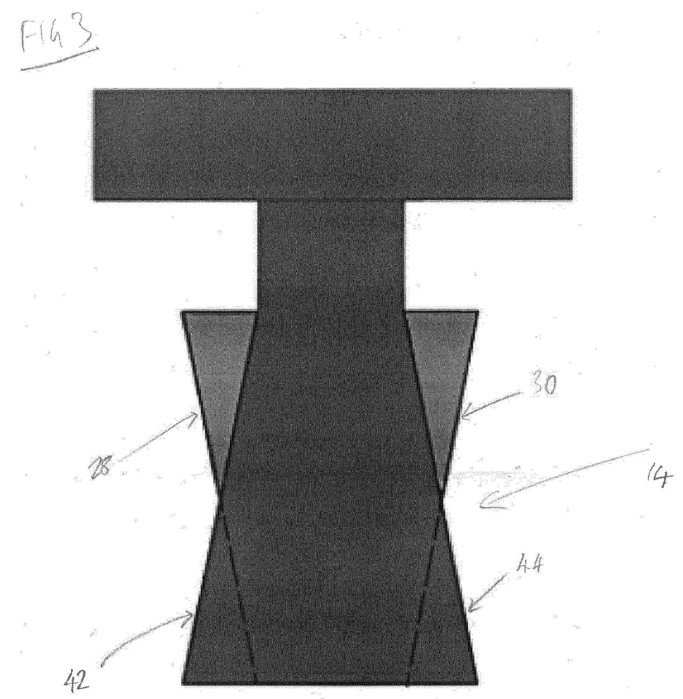

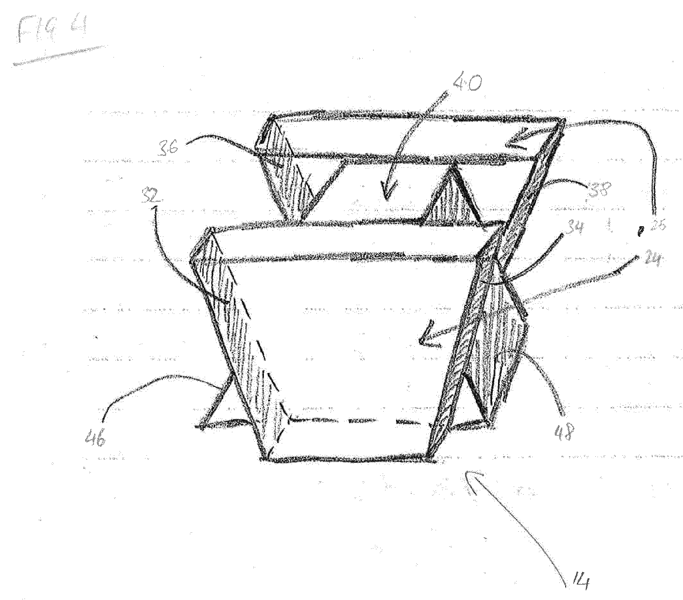

Referring to Figures 3 and 4, the actuating means 14 is shown in the form of two wedge-shaped actuating members 24 and 26, arranged on opposite sides of another wedge-shaped actuating member 40. A first inclined engaging surface 42 and a second inclined engaging surface 44 are defined by respective opposite faces 46 and 48 of actuating member 40. A third inclined engaging surface 28 is defined by faces 32 and 36 of respective actuating members 24, 26, and a fourth inclined engaging surface 30 is defined by faces 34 and 38 of respective actuating members 24, 26, the faces 32, 36 being arranged opposite respective surfaces 34, 38.

The engaging surfaces 16 and 18 of the first valve member 10 engage respective first and third engaging surfaces 42 and 28, and the engaging surfaces 20 and 22 of the second valve member 12 engage respective second and fourth engaging surfaces 44 and 30.

To place the valve apparatus in the first valve setting, the first and second valve members 10 and 12 are moved downward relative to actuating member 40. As the valve members 10, 12 move downward, first and second engaging surfaces 42 and 44 of actuating member 40 contact engaging surfaces 16 and 20 of the first and second valve members 10, 12 respectively, and consequently exert a contact force on the valve members 10, 12. The horizontal components of the forces experienced by the valve members 10, 12 cause the valve members 10, 12 to begin to move toward the respective first and second parts 4, 6 of the conduit 8. As the first and second valve members 10, 12 move further downward relative to actuating member 40, the engaging surfaces 16 and 20 of the respective valve members 10, 12 slide over respective first and second engaging surfaces 42 and 44 of actuating member 40 and the valve members 10, 12 move further outward toward the respective first 4 and second 6 parts of the conduit 8 to form a sealing connection. After forming the sealing connection, the force exerted by actuating member 40 on valve members 10 and 12 increases as those valve members 10, 12 move further downward relative to actuating member 40, thereby increasing the force with which the valve apparatus engages the conduit.

To place the valve apparatus in the second valve setting, the first and second valve members 10 and 12 are moved upward relative to actuating members 24 and 26. As the valve members 10, 12 move upward, third and fourth engaging surfaces 28 and 30 of actuating members 24 and 26 contact respective engaging surfaces 18 and 22 of the first and second valve members 10, 12 respectively, and consequently exert a contact force on the valve members 10, 12. The horizontal components of the forces experienced by the valve members 10, 12 cause the valve members 10, 12 to begin to move toward the first 4 and second 6 parts of the conduit 8. As the first and second valve members 10, 12 move further upward relative to actuating members 24 and 26, the engaging surfaces 18 and 22 of the valve members 10, 12 slide over respective third and fourth engaging surfaces 28 and 30 of actuating members 24 and 26 and the valve members 10, 12 move further outward toward the first 4 and second 6 parts of the conduit 8 to form a sealing connection. After forming the sealing connection, the force exerted by actuating members 24 and 26 on valve members 10 and 12 increases as those valve members 10, 12 move further upward relative to actuating members 24 and 26, thereby increasing the force with which the valve apparatus engages the conduit.

First and second valve members 10 and 12 and actuating member 40 have apertures therethrough (not shown), which coaxially align relative to one another in one of the first and second valve settings, and can be manufactured to have similar cross-section to the conduit 8. In one example, the apertures may be located in the first and second valve members 10, 12 such that the apertures align coaxially with the conduit 8 in the first valve setting. Figure 1, which shows the valve apparatus in the first valve setting, therefore shows the valve apparatus in a position which allows the passage of fluid between the first 4 and second 6 parts of the conduit 8 and prevent fluid flow from either part of the conduit 8 into any other area such as into a space 50 within a housing 52 of the valve apparatus, while Figure 2, which shows the valve apparatus in the second valve setting, therefore shows the valve apparatus in a position which prevents fluid from either part of the conduit 8 from escaping.

It will be appreciated by persons skilled in the art that the above embodiments have been described by way of example only and not in any limitative sense, and that various alterations and modifications are possible without departure from the scope of the invention as defined by the appended claims.

## Claims

1. A valve apparatus (2) for sealing connection to first and second parts (4,6) of a conduit (8), the valve apparatus comprising:-
at least one first valve member (10) moveable between a first position thereof, in which said first valve member is sealingly connected to a first part (4) of a conduit (8) in a first valve setting, and a second position thereof, in which said first valve member is sealingly connected to said first part of said conduit in a second valve setting;
at least one second valve member (12) moveable between a first position thereof, in which said second valve member is sealingly connected to a second part (6) of said conduit in said first valve setting, and a second position thereof, in which said second valve member is sealingly connected to said second part of said conduit in said second valve setting; and
actuator means (14) moveable relative to said first and second valve members for moving said first and second valve members into said first and second valve settings, the actuator means comprising:
(i) at least one first engaging surface (42) for slidably engaging said first valve member for urging said first valve member into said first valve setting;
(ii) at least one second engaging surface (44) for slidably engaging said first valve member for urging said first valve member into said second valve setting;
(iii) at least one third engaging surface (28) for slidably engaging said second valve member for urging said second valve member into said first valve setting; and
(iv) at least one fourth engaging surface (30) for slidably engaging said second valve member for urging said second valve member into said second valve setting;
wherein a position of engagement of at least one said first engaging surface with said first valve member is separated from a position of engagement of at least one said second engaging surface with said first valve member in a direction transverse to a direction of movement of said first valve member into said first and second valve settings and transverse to a direction of movement of the actuator means relative to the first valve member; and
wherein a position of engagement of at least one said third engaging surface with said second valve member is separated from a position of engagement of at least one said fourth engaging surface with said second valve member in a direction transverse to a direction of movement of said second valve member into said first and second valve settings and transverse to a direction of movement of the actuator means relative to the second valve member.

2. A valve apparatus according to claim 1, wherein said actuating means comprises a plurality of said first and/or second surfaces arranged on opposite sides of at least one corresponding said second and/or first surface.

3. A valve apparatus according to claim 1 or 2, wherein said first and second valve members each have at least one respective aperture therethrough to allow fluid communication between said first and second parts of said conduit in at least one of said first and second valve settings.

4. A valve apparatus according to any one of the preceding claims, wherein said valve apparatus is adapted to prevent fluid flow between said first and second parts of said conduit in at least one of said first and second valve settings.

5. A valve apparatus according to any one of the preceding claims, wherein said actuator means comprises at least one first actuating member (40) comprising at least one said first engaging surface and at least one said third engaging surface defining opposite faces (46, 48) of said first actuating member; and at least one second actuating member (24, 26) comprising at least one said second engaging surface and at least one said fourth engaging surface defining opposite faces (32, 34, 36, 38) of said second actuating member.

6. A valve apparatus according to any one of the previous claims, wherein at least one said first engaging surface is inclined relative to at least one said third engaging surface, and at least one said second engaging surface is inclined relative to at least one said fourth engaging surface.

7. A valve apparatus according to any one of the preceding claims, wherein said actuating means further comprises at least one aperture therethrough to allow fluid communication between said first and second parts of said conduit in at least one of said first and second valve settings.
